# EUROPÄISCHE PATENTANMELDUNG

(11) **EP 2 472 180 A1**
(43) Veröffentlichungstag der Anmeldung: **04.07.2012**
(21) Anmeldenummer: 12154964.6
(22) Anmeldetag: 19.04.2010
(51) Int. Cl.: F23D 14/66, F23J 9/00, F23L 15/04

(54) **Brennervorrichtung**

(62) Teilanmeldung aus: 10160329.8
(71) Anmelder: Elster GmbH, 55252 Mainz-Kastel (DE)
(72) Erfinder: Gitzinger, Heinz-Peter, 41469 Neuss (DE)
(74) Vertreter: Zenz

(57) **Zusammenfassung**

Bei einer Brennervorrichtung zur direkten Beheizung einer Thermoprozessanlage, bevorzugt mit einem konzentrischen Aufbau, die einen zum Teil in einer Ofenwand (101) der Thermoprozessanlage einsetzbaren Rekuperatorbrenner (100), der ein Luftführungsrohr (107) und einen als Wärmetauscher dienenden und das Luftführungsrohr (107) koaxial umgebenden Rekuperator (106) aufweist, und ein den Rekuperator (106) koaxial umgebendes Abgasführungsrohr (105) umfasst, soll eine Lösung geschaffen werden, die auf konstruktiv einfache Weise und kostengünstig die Reinigungsmöglichkeit des Rekuperators eines Rekuperatorbrenners verbessert und vereinfacht. Dies wird dadurch gelöst, dass zumindest ein Rohrlängsabschnitt (110) des Abgasführungsrohres (105) aus wenigstens zwei Schalensegmenten (111; 111') gebildet ist, die in radialer Richtung zur Längsachse des Rekuperators (106) abnehmbar und/oder schwenkbar sind, wobei die wenigstens zwei Schalensegmente (111; 111') im Betrieb des Rekuperatorbrenners (100) außerhalb der Ofenwand (101) angeordnet sind und einen zu dem Rohrlängsabschnitt (110) des Abgasführungsrohres (105) korrespondierenden Längsabschnitt (114) des Rekuperators (106) in fluiddichtender Weise umschließen.

## Beschreibung

Die Erfindung richtet sich auf eine Brennervorrichtung zur direkten Beheizung einer Thermoprozessanlage, bevorzugt mit einem konzentrischen Aufbau, wobei die Brennervorrichtung einen zum Teil in einer Ofenwand der Thermoprozessanlage einsetzbaren Rekuperatorbrenner, der ein Luftführungsrohr und einen als Wärmetauscher dienenden und das Luftführungsrohr koaxial umgebenden Rekuperator aufweist, und ein den Rekuperator koaxial umgebendes Abgasführungsrohr umfasst. Schließlich richtet sich die Erfindung auf ein Verfahren zur Wartung einer solchen Brennervorrichtung.

In vielen technischen Anwendungen, wie zum Beispiel im Bereich des Industrieofenbaus, bedarf es der Wärmeübertragung an ein zu behandelndes Gut. Die direkte Beheizung der eingesetzten Ofenanlagen erfolgt dabei beispielsweise durch eine Vielzahl von Brennern, die in der Wandung der Thermoprozessanlage bzw. Ofenanlage angeordnet sind und zur Beheizung des Ofeninnenraumes der Anlage dienen. Anlagen von diesem Typ für Industrieöfen, die den Ofeninnenraum direkt beheizen, sind hinlänglich bekannt und können für Öfen verwendet werden, in welche ein mit Wärme zu behandelndes Gut für eine bestimmte Zeitdauer eingebracht wird oder kontinuierlich von einem Ofeneingang zu einem entfernt zu diesem angeordneten Ofenausgang bewegt wird.

Bei Thermoprozessanlagen der Eisen- und Stahlindustrie wird die aufzubringende Energie überwiegend zur Erzeugung hoher Temperaturen benötigt. Dabei kann der hohe Energiebedarf durch entsprechende Maßnahmen deutlich gesenkt werden. Eine entsprechende Maßnahme ist zum Beispiel die Nutzung der Wärme der Verbrennungsabgase bzw. Abgase zur Vorwärmung der Verbrennungsluft. In vielen Prozessen wird hierfür ein Rekuperator eingesetzt, der ein Bauteil eines Rekuperatorbrenners darstellt.

Bei Rekuperatorbrennern wird durch einen Wärmeaustausch zwischen der zugeführten Verbrennungsluft und dem Abgasstrom des Brenners der Wirkungsgrad erhöht. Hierzu dient der Rekuperator, der zwischen diesen beiden Gasströmen einen Wärmeaustausch vornimmt.

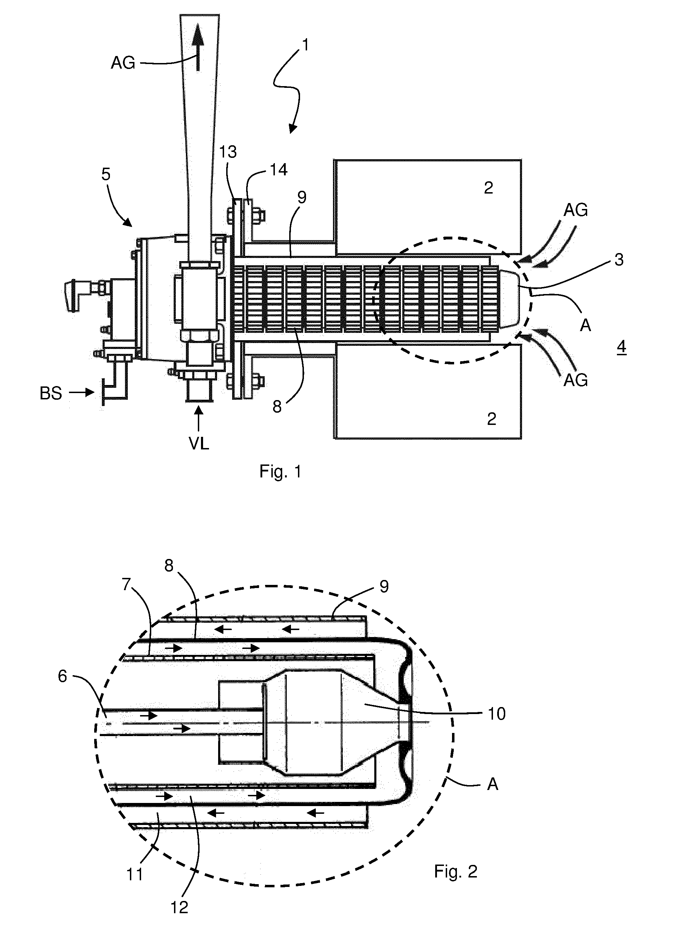

In den Figuren 1 und 2 ist ein aus dem Stand der Technik bekannter Rekuperatorbrenner 1 für eine Thermoprozessanlage dargestellt, wie er beispielsweise näher in der DE 195 02 976 A1 beschrieben ist. Figur 1 zeigt eine schematische Schnittansicht des zumindest abschnittsweise sich durch einen Durchbruch in einer Ofenwand 2 der Thermoprozessanlage erstreckenden Rekuperatorbrenners 1, der beispielhaft ein Rippenrohr als Rekuperator aufweist und dessen Mündung 3 in den Ofeninnenraum 4 der Anlage gerichtet ist. Der Rekuperatorbrenner 1 weist einen Brennerkopf 5 zur Zufuhr von Verbrennungsluft (Pfeil VL) und Brennstoff (Pfeil BS) (beispielsweise Gas) und zur Abfuhr von Abgasen (Pfeil AG) auf. Der in Figur 2 im Detail (schematische Vergrößerung des Ausschnitts A aus Figur 1) gezeigte konzentrische Aufbau des Rekuperatorbrenners 1, der in dieser Darstellung jedoch beispielhaft ein Glattrohr als Rekuperator aufweist, umfasst eine Brennstoffleitung 6, ein Luftführungsrohr 7, einen das Luftführungsrohr 7 umschließenden Rekuperator 8 und ein den Rekuperator 8 koaxial umgebendes Abgasführungsrohr 9. Dabei erstreckt sich das Abgasführungsrohr 9 bis innerhalb des Durchbruchs in der Ofenwand. An einem Ende des Abgasführungsrohres 9 weist dieses eine Flanschplatte 13 auf, die an einer weiteren Flanschplatte 14 gehalten ist, die über einen Rohrabschnitt an der Ofenwand 2 fixiert ist. Der Rekuperatorbrenner 1 ist in das Abgasführungsrohr 9 eingeschoben und mit dem Brennerkopf 5 an der Flanschplatte 13 montiert.

Über die Brennstoffleitung 6 gelangt Brennstoff in die Brennkammer 10. Die Zündung des Brennstoff/Luft-Gemisches erfolgt dabei über in der Brennkammer 10 vorgesehene Mittel. Zwischen dem Rekuperator 8 und dem Abgasführungsrohr 9 ist ein Abgaskanal 11 gebildet. Durch den Abgaskanal 11 strömen Abgase aus dem Ofeninnenraum 4 in Richtung des Brennerkopfes 5 und erhitzen dabei den Rekuperator 8. Die Abgase aus dem Ofeninnenraum 4 werden dabei beispielsweise von einem am Brennerkopf 5 angeordneten Abgasejektor zur Abgasrückführung durch den Abgaskanal 11 hindurch angesaugt. Der Abgasejektor erzeugt mittels einer Düse einen Unterdruck und saugt damit die Abgase aus dem Ofeninnenraum 4 an. Die in dem Luftführungskanal 12, der zwischen dem Luftführungsrohr 7 und dem Rekuperator 8 ausgebildet ist, geförderte Verbrennungsluft strömt in entgegen gesetzter Richtung im Vergleich zu den Abgasen. Auf diese Weise findet ein Wärmeaustausch zwischen den im Abgaskanal 11 strömenden Abgasen der Verbrennung und der im Luftführungskanal 12 strömenden Verbrennungsluft nach dem Gegenstromprinzip statt.

Neben dem Abgas des Rekuperatorbrenners 1 nehmen aber auch Gase der Ofenatmosphäre und/oder andere in der Ofenatmosphäre vorhandene Stoffe, wie beispielsweise Staub und dergleichen, an dem Wärmeaustausch im Rekuperator 8 teil. Dabei kann es beispielsweise bei der Wärmebehandlung von molybdänhaltigen Stählen dazu kommen, dass das Molybdän bei hohen Temperaturen innerhalb des Ofeninnenraumes 4 sublimiert und gasförmiger Bestandteil der Ofenatmosphäre wird. Molybdän kann zu Molybdänoxid oder zu anderen Verbindungen reagieren. Molybdän, Molybdän-Oxid und mögliche Molybdän-Verbindungen werden nachfolgend vereinfachend nur mit Molybdän bezeichnet. Diese Sublimation kann dazu führen, dass molybdänhaltige Abgase am Wärmeaustausch im Rekuperatorbrenner 1 teilnehmen. Bei der Abkühlung des molybdänhaltigen Abgases aufgrund des Wärmeaustausches resublimiert das Molybdän und es bildet sich ein pulverartiger Belag, der sich auf dem Rekuperator 8 niederschlägt. Dies kann ferner dazu führen, dass die Wärmerückgewinnung bzw. der Wärmeaustausch im Rekuperator 8 behindert wird. Im schlimmsten Fall kann die Resublimation des im Abgas enthaltenen Molybdäns zu einer Verstopfung bzw. Zusetzung des Abgaskanals 11 im Rekuperatorbrenner 1 führen.

Daher sieht der Stand der Technik für solche kritischen Anwendungsfälle eine Betriebsweise des Rekuperatorbrenners 1 in der Art vor, dass die Resublimiation im Rekuperatorbrenner 1, insbesondere im Abgaskanal 11, durch Begrenzung der Abkühlung des Abgases im Rekuperator 8 weitestgehend vermieden wird. Mit anderen Worten wird bei vergleichbaren wie vorstehend beschriebenen Anwendungsfällen der Wärmeaustausch des Rekuperatorbrenners 1 herabgesetzt, um der Gefahr der Resublimation innerhalb des Rekuperatorbrenners 1 vorzubeugen. Somit wird das Molybdän mit dem Abgas über einen Kamin abgeführt.

Wenn jedoch aufgrund einer nicht kontinuierlichen Betriebsweise der Thermoprozessanlage Abkühlvorgänge innerhalb des Rekuperatorbrenners 1 unvermeidlich sind, kommt es in dem vorstehend genannten kritischen Anwendungsfall zu unerwünschten Ablagerungen von Molybdän. Wenn diese Ablagerungen den Abgaskanal 11 blockieren, so dass das Abgas nicht mehr bis zum Brennerkopf 5 gelangt und von dort abgeführt werden kann, müssen üblicherweise solche Molybdän-Ablagerungen im Bereich des Rekuperators 8 von einer Person per Hand gereinigt werden. Dazu ist es üblicherweise erforderlich, dass der Rekuperatorbrenner 1 mit relativ hohem Montageaufwand ausgebaut werden muss. Die Nachteile sowohl bei der Betriebsweise mit beschränkter Wärmerückgewinnung als auch bei der Reinigung eines solchen aus dem Stand der Technik bekannten Rekuperatorbrenners 1 liegen auf der Hand. Die beschränkte Wärmerückgewinnung führt zu einem reduzierten feuerungstechnischen Wirkungsgrad der Thermoprozessanlage aufgrund der begrenzten Abgaswärmerückgewinnung. Bei der Reinigung des Rekuperatorbrenners 1 ist ferner die damit betraute Person durch Staub gesundheitlichen Belastungen ausgesetzt.

Der Erfindung liegt die Aufgabe zugrunde, bei einer zur direkten Beheizung einer Thermoprozessanlage geeigneten Brennervorrichtung der eingangs bezeichneten Art eine Lösung zu schaffen, die auf konstruktiv einfache Weise und kostengünstig die Reinigungsmöglichkeit des Rekuperators eines Rekuperatorbrenners verbessert und vereinfacht.

Bei einer Brennervorrichtung der eingangs bezeichneten Art wird diese Aufgabe erfindungsgemäß dadurch gelöst, dass zumindest ein Rohrlängsabschnitt des Abgasführungsrohres aus wenigstens zwei Schalensegmenten gebildet ist, die in radialer Richtung zur Längsachse des Rekuperators abnehmbar und/oder schwenkbar sind, wobei die wenigstens zwei Schalensegmente im Betrieb des Rekuperatorbrenners außerhalb der Ofenwand anordenbar bzw. angeordnet sind und einen zu dem Rohrlängsabschnitt des Abgasführungsrohres korrespondierenden Längsabschnitt des Rekuperators in fluiddichtender Weise umschließen.

Ebenso wird die vorstehende Aufgabe bei einem Verfahren zur Wartung einer Brennervorrichtung nach einem der Ansprüche 1 bis 4 dadurch gelöst, dass zur Wartung des als Wärmetauscher dienenden Rekuperators der Rekuperatorbrenner außer Betrieb gesetzt wird, und dass die wenigstens zwei Schalensegmente derart demontiert oder klappenartig verschwenkt werden, dass der von den wenigstens zwei Schalensegmenten umgebene Längsabschnitt des Rekuperators freigelegt und zu Wartungszwecken von außen zugänglich wird.

Durch die Erfindung wird eine Möglichkeit bereitgestellt, die eine Wartung eines Rekuperators während laufendem Ofenbetrieb ermöglicht. Im Gegensatz zum Stand der Technik, bei dem der Rekuperatorbrenner aufwändig aus einer Wandung einer Thermoprozessanlage ausgebaut werden muss, braucht gemäß der vorliegenden Erfindung lediglich die Abdeckung des Rekuperatorbrenners bzw. der aus wenigstens zwei Schalensegmenten gebildete Rohrlängsabschnitt des Abgasführungsrohres entweder demontiert oder klappenartig verschwenkt werden, wodurch ein wesentlicher Bereich des Rekuperators freiliegt und ein Zugang zum Rekuperator zu Wartungszwecken geschaffen ist. Dadurch ist es möglich, dass auf der Außenfläche des Rekuperators kondensierte und/oder resublimierte Stoffe oder auch Staub von einer Person mittels entsprechender Hilfsmittel entfernt werden können, ohne dass die Person selbst während der Wartungsarbeiten einer gesundheitlichen Belastung ausgesetzt ist. Die Erfindung ermöglicht es darüber hinaus, dass der Rekuperatorbrenner selbst bei Anwendungsfällen, bei denen im Ofeninnenraum Stoffe in das Abgas sublimieren, ohne Einschränkungen hinsichtlich der im Rekuperator stattfindenden Vorwärmung der Verbrennungsluft betrieben werden kann. Dadurch kann der Rekuperatorbrenner auch bei solchen kritischen Anwendungsfällen mit maximaler Effizienz betrieben werden, was daran liegt, dass während des laufenden Ofenbetriebes Ablagerungen durch aus dem Abgas am Rekuperator resublimierte Stoffe oder andere sich am Rekuperator ablagernde Stoffe auf relativ einfache Weise und schnell entfernt werden können, ohne dass die Brennervorrichtung dazu aufwändig demontiert werden müsste. Insgesamt kann durch die Erfindung aufgrund der Möglichkeit einer hohen Abgaswärmerückgewinnung (starke Abgaskühlung am Rekuperator) der Ofenwirkungsgrad, insbesondere bei Resublimationsvorgängen im Bereich des Rekuperators, erhöht werden. Auch ermöglicht die Erfindung eine einfache Rückgewinnung von am Rekuperator abgeschiedenen Stoffen, so dass ferner eine Freisetzung von diesen Stoffen in die Umwelt vermieden wird.

In Ausgestaltung der erfindungsgemäßen Brennervorrichtung ist vorgesehen, dass ein zwischen der Mündung des Rekuperatorbrenners und den wenigstens zwei Schalensegmenten verlaufender Längsabschnitt des Rekuperators glattwandig ausgebildet ist. Dieser Längsabschnitt erstreckt sich in Einbauposition des Rekuperatorbrenners im Wesentlichen innerhalb der Ofenwand, also einem von außen schlecht zugänglichen Bereich. Die glattwandige Ausbildung dieses Längsabschnitts liefert einen ungünstigen Wärmeaustausch, so dass das zur Erwärmung verwendete Abgas sich innerhalb dieses Längsabschnitts nur geringfügig abkühlt. Aufgrund der geringen Abkühlung des Abgases ist daher innerhalb dieses Längsabschnitts nur eine unwesentliche Kondensation oder Resublimation zu erwarten, so dass Ablagerungen, welche den zwischen Rekuperator und Abgasführungsrohr gebildeten Ringraum bzw. Abgaskanal blockieren bzw. verstopfen könnten, in diesem Bereich im Wesentlichen nicht anfallen.

In Weiterbildung der Brennervorrichtung sieht die Erfindung weiterhin vor, dass zumindest der von den wenigstens zwei Schalensegmenten umschlossene Längsabschnitt des Rekuperators mit einer die Wärmeübertragung begünstigenden vergrößerten Wandfläche ausgebildet ist. Dadurch kann der maximal wirksame Wärmeaustausch zwischen Abgas und Verbrennungsluft gezielt auf diesen Bereich bzw. Längsabschnitt begrenzt werden, der aufgrund der wenigstens zwei demontierbaren bzw. klappenartig verschwenkbaren Schalensegmente zu Wartungszwecken einfach zugänglich ist. Somit findet innerhalb dieses Längsabschnitts eine gezielte Kondensation und/oder Resublimation von im Abgas enthaltenen Bestandteilen statt, so dass deren Freisetzung an die Umgebung vermindert wird. Eine maximale Wärmeübertragung, welche eine gezielte Kondensation und/oder Resublimation von im Abgas enthaltenen Stoffen bewirken kann, wird durch eine entsprechende Form der Wandung des Rekuperators begünstigt. Hierzu kann die Wandung des Rekuperators eine Vielzahl von Rippen aufweisen.

Um bei Wartungsarbeiten Personen vor Abgasen aus dem Ofeninnenraum zu schützen, sieht die Erfindung in weiterer Ausgestaltung der Brennervorrichtung vor, dass der zwischen dem Rekuperator und dem Abgasführungsrohr ausgebildete Ringraum im Bereich zwischen der Mündung des Rekuperatorbrenners und den wenigstens zwei Schalensegmenten mittels zumindest eines Absperrelements abdichtbar ist.

In Weiterbildung des erfindungsgemäßen Verfahrens ist ferner vorgesehen, dass nach dem Freilegen des Längsabschnitts des Rekuperators aus dem Abgas niedergeschlagene und/oder abgelagerte Stoffe, vorzugsweise kondensierte und/oder resublimierte Stoffe oder Staubkörner an Wassertropfen, die sich im Betrieb des Rekuperatorbrenners auf dem von den wenigstens zwei Schalensegmenten überdeckten Längsabschnitt des Rekuperators niederschlagen, mittels einer Reinigungsvorrichtung entfernt werden. Als Reinigungsvorrichtung kann beispielsweise eine Absaugvorrichtung nach Art eines Staubsaugers allein oder in Kombination mit einem Bürstkopf zur Lockerung von Ablagerungen verwendet werden, so dass ein direkter Kontakt mit den abgelagerten Stoffen vermieden wird. Zwar muss zu Wartungs- bzw. Reinigungszwecken der Rekuperatorbrenner außer Betrieb gesetzt werden. Allerdings können Wartungsarbeiten bei laufendem Ofenbetrieb durchgeführt werden, was einen enormen Vorteil gegenüber aus dem Stand der Technik bekannten Rekuperatorbrennern darstellt.

Bei dem erfindungsgemäßen Verfahren ist in weiterer Ausgestaltung vorgesehen, dass nach dem Außerbetriebsetzen des Rekuperatorbrenners und vor oder nach dem Freilegen des Längsabschnitts des Rekuperators ein zwischen dem Rekuperator und dem Abgasführungsrohr ausgebildeter Ringraum im Bereich zwischen der Mündung des Rekuperatorbrenners und den wenigstens zwei Schalensegmenten mittels zumindest eines Absperrelements abgedichtet wird. Dies verhindert während der Wartungsarbeiten den Austritt von Abgasen aus dem Ofeninnenraum und schützt die die Wartungsarbeiten durchführende Person.

Schließlich ist in Weiterbildung des erfindungsgemäßen Verfahrens vorgesehen, dass nach dem Außerbetriebsetzen des Rekuperatorbrenners eine Schutzhülle um den Bereich der wenigstens zwei Schalensegmenten angeordnet wird, die Mittel aufweist, durch die das Freilegen und Warten des Längsabschnitts des Rekuperators von außerhalb der Schutzhülle durchführbar sind.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der exemplarisch bevorzugte Ausführungsbeispiele der Erfindung dargestellt sind. Es zeigt:
Figur 1 eine schematische Darstellung eines aus dem Stand der Technik bekannten Rekuperatorbrenners mit Rippenrohr in Seitenansicht,
Figur 2 eine vergrößerte Darstellung eines Rekuperatorbrenners mit Glattrohr in Schnittansicht,
Figur 3 eine schematische Darstellung einer erfindungsgemä-βen Brennervorrichtung in Seitenansicht,
Figur 4 eine schematische Querschnittsdarstellung einer Montagevorrichtung mit Schalensegmenten gemäß einer ersten Ausführungsform,
Figur 5 eine schematische Querschnittdarstellung einer Montagevorrichtung mit Schalensegmenten gemäß einer zweiten Ausführungsform,
Figur 6 eine schematische Darstellung der erfindungsgemäßen Brennervorrichtung in Seitenansicht bei verschwenkten Schalensegmenten,
Figur 7 eine schematische Querschnittdarstellung der Montagevorrichtung bei verschwenkten Schalensegmenten gemäß der ersten Ausführungsform,
Figur 8 eine schematische Querschnittsdarstellung der Montagevorrichtung bei verschwenkten Schalensegmenten gemäß der zweiten Ausführungsform,
Figur 9 eine schematische Darstellung der erfindungsgemäßen Brennervorrichtung bei Wartungsarbeiten,
Figur 10 einen vergrößerten Ausschnitt eines Details B aus Figur 9 und
Figur 11 eine exemplarische Darstellung zur Veranschaulichung eines Verfahrens zur Wartung der erfindungsgemäßen Brennervorrichtung.

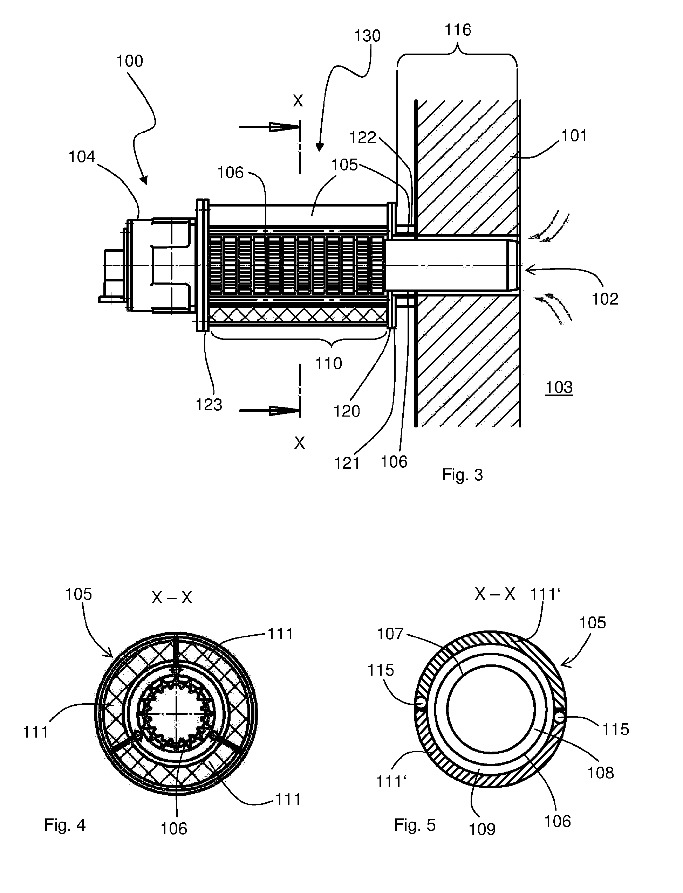

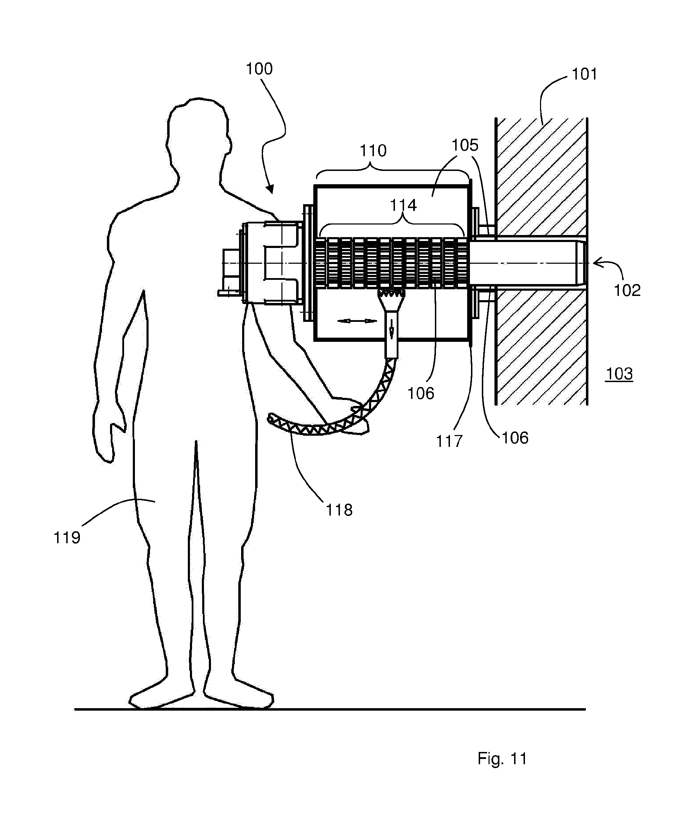

In den Figuren 3 bis 11 ist ein insgesamt mit 100 bezeichneter Rekuperatorbrenner als Teil einer erfindungsgemäßen Brennervorrichtung gezeigt. Der Rekuperatorbrenner 100 ist in Einbauposition in einer Thermoprozessanlage abschnittsweise in einer Ofenwand 101 der Thermoprozessanlage angeordnet, wobei die Mündung 102 des Rekuperatorbrenners 100 in den Ofeninnenraum 103 der Anlage gerichtet ist, um den Ofeninnenraum 103 zur Wärmebehandlung eines innerhalb des Ofeninnenraums 103 angeordneten Gutes direkt zu beheizen.

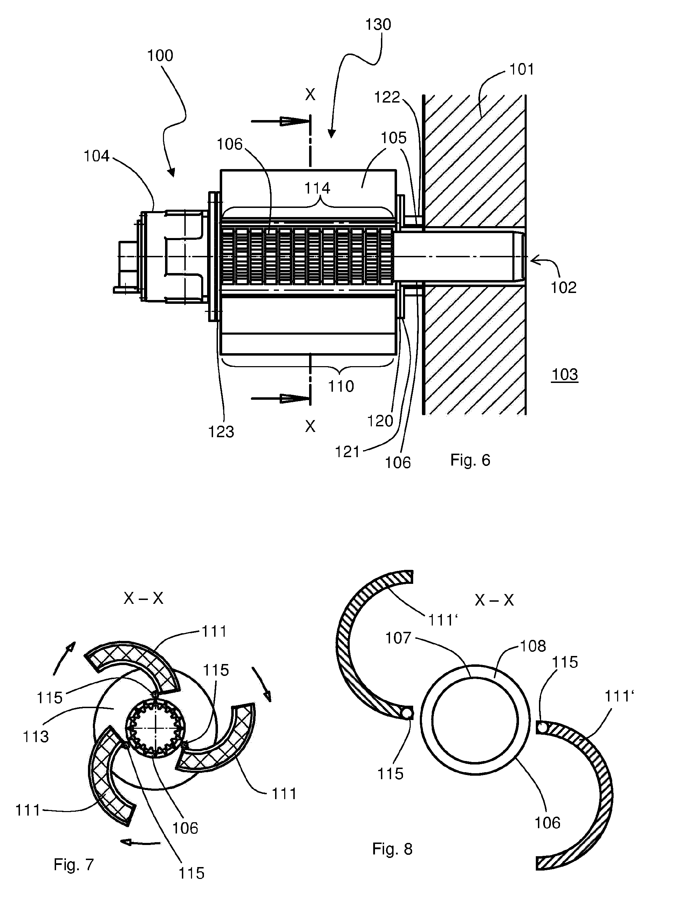

Der Rekuperatorbrenner 100 umfasst einen Brennerkopf 104 zur Zufuhr von Verbrennungsluft und Brennstoff und zur Abfuhr von Abgasen, einen Rekuperator 106 und ein innerhalb des Rekuperators 106 koaxial zu diesem angeordnetes Luftführungsrohr 107. Der zwischen dem Rekuperator 106 und dem Luftführungsrohr 107 gebildete Ringraum wird als sogenannter Luftführungskanal 108 (siehe Figuren 5 und 8) bezeichnet. Der weitere Aufbau des Rekuperatorbrenners 100, der von einem zur Brennervorrichtung zugehörigen Abgasführungsrohr 105 umgeben ist, ist aus dem Stand der Technik bekannt und im Wesentlichen identisch zu dem in den Figuren 1 und 2 gezeigten Aufbau, so dass auf die dortigen Ausführungen verwiesen wird.

Zwischen dem Rekuperator 106 und dem Abgasführungsrohr 105 ist ein weiterer Ringraum, ein sogenannter Abgaskanal 109 (siehe Figur 5), gebildet. Verbrennungsgase oder Abgase strömen im Betrieb des Rekuperatorbrenners 100 vom Ofeninnenraum 103 durch den Abgaskanal 109 in Richtung des Brennerkopfes 104 und erhitzen auf diese Weise den Rekuperator 106, der die Wärme auf über den Luftführungskanal 108 zugeführte Verbrennungsluft zur Vorwärmung dieser abgibt.

Wie den Figuren 3 bis 11 zu entnehmen ist, verläuft ein Längsabschnitt des Rekuperatorbrenners 100 innerhalb der Ofenwand 101, wohingegen ein Längsabschnitt des Rekuperatorbrenners 100 außerhalb und auf der dem Ofeninnenraum 103 gegenüberliegenden Seite der Ofenwand 101 angeordnet ist.

Die Erfindung sieht vor, dass ein Rohrlängsabschnitt 110 des Abgasführungsrohres 105 bzw. des Abgaskanals 109 aus wenigstens zwei Schalensegmenten 111 bzw. 111' gebildet ist, wie insbesondere den Figuren 4, 5, 7 und 8 zu entnehmen ist. Dieser Rohrlängsabschnitt 110 des Abgasführungsrohres 105 verläuft zwischen Ofenwand 101 und Brennerkopf 104. Somit ist der außerhalb der Ofenwand 101 verlaufende Rohrlängsabschnitt 110 des Abgasführungsrohres 105 in seinem Querschnitt in mehrere kreisbögenförmige Schalensegmente 111 bzw. 111' unterteilt. Gemäß einer ersten Ausführungsform, die in den Figuren 4 und 7 dargestellt ist, ist das Abgasführungsrohr 6 in drei Schalensegmente 111 unterteilt, die eine identische Kreisbogenlänge aufweisen. Demgegenüber ist gemäß einer zweiten Ausführungsform, die in den Figuren 5 und 8 schematisch dargestellt ist, vorgesehen, dass der Rohrlängsabschnitt 110 des Abgasführungsrohres 105 in nur zwei Schalensegmente 111 unterteilt ist. Die Schalensegmente 111 bzw. 111', die einen Teilabschnitt des Abgasführungskanals 109 bzw. des Abgasführungsrohres 105 bilden, sind demontierbar und/oder klappenartig schwenkbar bzw. schwenkbeweglich angebracht bzw. gehalten. Als Anbringung dienen ein Verbindungsabschnitt 120 und ein Montageabschnitt 123.

Gemäß der in den Figuren 3 bis 11 dargestellten bevorzugten Ausführungsform weist ein im Wesentlichen innerhalb der Ofenwand 101 verlaufender Längsabschnitt 116 des Abgasführungsrohres 105 den Verbindungsabschnitt 120 in Form einer Flanschplatte auf, die an einem Flansch 121 montiert ist, der über einen Rohrabschnitt 122 mit der Ofenwand 101 verbunden ist. An dem Montageabschnitt 123 ist der Brennerkopf 104 angebracht. Die Schalensegmente 111 bzw. 111', der Montageabschnitt 123 und der Verbindungsabschnitt 120 bilden somit eine Montagevorrichtung 130 für den Rekuperatorbrenner 100, wobei die Schalensegmente 111 bzw. 111' einen sich in Längsrichtung des Rekuperatorbrenners 100 erstreckenden Hohlraum definieren, durch den sich der Rekuperatorbrenner 100 hindurch erstreckt. Die Schalensegmente 111 bzw. 111' bilden zusammen mit dem Rekuperator 106 einen Abgaskanal 109 und stellen eine Abdeckung für einen Längsabschnitt 114 des Rekuperators 106 dar. Die Schalensegmente 111 bzw. 111' umschließen dabei einen Längsabschnitt 114 in fluiddichtender Weise. Für einen Zugriff auf den Längsabschnitt 114 sind die Schalensegmente 111 bzw. 111' jedoch demontierbar oder klappenartig verschwenkbar an dem Montageabschnitt 123 angebracht.

Im Betrieb der Brennervorrichtung bzw. des Rekuperatorbrenners 100 sind somit die Schalensegmente 111 bzw. 111' an ihren entsprechenden Längsenden an dem Montageabschnitt 123 und dem Verbindungsabschnitt 120 fixiert, wobei ihre Längskanten in dichtender Weise aneinander anliegen und zusammen mit dem Rekuperator 106 den Längsabschnitt 114 des Abgaskanals 109 definieren, durch den das zur Vorwärmung der Verbrennungsluft strömende Abgas in Richtung des Brennerkopfes 104 gefördert wird. Im Betrieb bzw. in Einbauposition des Rekuperatorbrenners 100 umschließen die Schalensegmente 111 bzw. 111' den Längsabschnitt 114 des Rekuperators 106 in fluiddichtender Weise und verhindern einen Austritt des im Abgaskanal 109 strömenden Abgases in die Umgebung. Um eine Abgabe der im Abgas enthaltenen Wärme zu vermeiden kann das Abgasführungsrohr 105 und die Schalensegmente 111 bzw. 111' eine Isolation, d.h. eine Isolations- oder Wärmedämmschicht, aufweisen, wodurch eine im Wesentlichen einseitige Wärmeübertragung über den Rekuperator 106 bewirkt wird.

Zu Wartungszwecken des Rekuperatorbrenners 100 und insbesondere des Rekuperators 106 im Fall, dass sich im Abgas befindliche Stoffe wie beispielsweise Staub an dem Rekuperator 106 ablagern und dadurch die Wärmeübertragung auf die Verbrennungsluft beeinträchtigen oder den Abgaskanal 109 blockieren, wird der Rekuperatorbrenner 100 außer Betrieb gesetzt. Eine Wartung ist erfindungsgemäß ohne aufwändigen Ausbau des Rekuperatorbrenners 100 möglich. Erfindungsgemäß kann der Rekuperatorbrenner 100 auch während laufendem Ofenbetrieb gewartet werden, wozu die Schalensegmente 111 bzw. 111' an dem Montageabschnitt 123 und dem Verbindungsabschnitt 120 demontiert bzw. deren dortige Fixierung gelöst werden und dann in radialer Richtung von der Längsachse des Rekuperatorbrenners 100 weg entfernt werden können, so dass ein Zugang zu Wartungszwecken zumindest zu dem Längsabschnitt 114 des Rekuperators 106 (siehe beispielsweise Figuren 6, 9 und 11), der zu dem Rohrlängsabschnitt 110 des Abgasführungsrohres 105 korrespondiert, gewährleistet ist.

Es sei angemerkt, dass im Rahmen der Erfindung auch mehr als drei Schalensegmente den Rohrlängsabschnitt 110 des Abgasführungsrohres 105 bilden können und dass die Kreisbogenlänge der Schalensegmente unterschiedlich lang sein kann, solange gewährleistet ist, dass diese den Rohrlängsabschnitt 110 des Abgasführungsrohres 105 fluiddicht gegenüber dem Äußeren abdichten bzw. dass diese einen fluiddichten Längsabschnitt des Abgaskanals 109 bilden.

Alternativ zu einer kompletten Demontage und Entfernung der Schalensegmente 111 bzw. 111' ist in dem in den Figuren dargestellten Ausführungsbeispiel eine schwenkbewegliche Halterung bzw. Lagerung der Schalensegmente 111 bzw. 111' an den Flanschplatten 112 und 113 vorgesehen. Zu diesem Zweck sind Drehachsverbindungen 115 an einem jeweiligen Längsende der Schalensegmente 111 bzw. 111' vorgesehen, die im einfachsten Fall Schraubverbindungen sein können. Durch Lockerung einer solchen Schraubverbindung können dann die Schalensegmente 111 bzw. 111' um die jeweilige Drehachsverbindung 115 in radialer und tangentialer Richtung zu der Längsachse des Rekuperatorbrenners 100 bewegt werden. Die Schalensegmente 111 bzw. 111' sind somit klappenartig verschwenkbar und nehmen nach ihrer Verschwenkung eine wie in den Figuren 7 und 8 gezeigte Position ein.

Da sich im gesamten Abgaskanal 109 Ablagerungen von Stoffen aus dem Abgas bilden können und im Wesentlichen nur der Längsabschnitt 114 des Rekuperators 106 zu Wartungs- und Reinigungszwecken gut zugänglich ist, sollten Ablagerungen, beispielsweise in Form von Staub oder Stoffen infolge von Kondensationen und/oder Resublimationen, auch nur in dem Längsabschnitt 114 erfolgen. Erfindungsgemäß ist dazu zunächst vorgesehen, dass ein Längsabschnitt 116 des Rekuperators 106 glattwandig ausgebildet ist. Dieser Längsabschnitt 116 (siehe Figur 3) des Rekuperators 106 verläuft zwischen der Mündung 102 des Rekuperatorbrenners 100 und dem Verbindungsabschnitt 120 bzw. den Schalensegmenten 111 bzw. 111'. In diesem Bereich weist das aus dem Ofeninnenraum 103 angesaugte Abgas eine relativ hohe Temperatur auf. Aufgrund der glattwandigen Ausbildung des Rekuperators 106 in dem Längsabschnitt 116 wird die Temperatur nur geringfügig abnehmen, da eine glatte Wandung im Vergleich zu einer mit beispielsweise Rippen versehenen Wandung einen eher geringen Wärmeaustausch ermöglicht. Somit wird die Temperatur des in Richtung des Brennerkopfes 104 strömenden Abgases in Nähe der Schalensegmente 111 bzw. 111' nur geringfügig abnehmen, so dass eine Kondensation und/oder Resublimierung von im Abgas enthaltenen Stoffen für den Längsabschnitt 116 des Rekuperators 106 infolge seiner glattwandigen Ausbildung in diesem Bereich weitestgehend verhindert oder stark reduziert werden kann. Der glattwandig ausgebildete Längsabschnitt 114 des Rekuperators 106 stellt somit bekannterweise eine Wärmeaustauschfläche mit niedriger Wärmeübertragung dar.

Das aus dem Ofeninnenraum 103 abgesaugte Abgas durchströmt nach dem Längsabschnitt 116 den Längsabschnitt 114 des Rekuperators 106. Um eine gezielte Kondensation und/oder Resublimierung von im Abgas enthaltenen Stoffen zu erzielen ist gemäß der Erfindung dann vorgesehen, dass zumindest der von den Schalensegmenten 111 bzw. 111' umschlossene Längsabschnitt 114 des Rekuperators 106 keine glatte Wandung sondern eine die Wärmeübertragung begünstigende Formung aufweist. Beispielsweise kann eine solche Wandung des Rekuperators 106 eine Vielzahl von Rippen aufweisen, wie es beispielsweise in Figur 3 dargestellt ist. Alternativ kann die Wandung des Rekuperators 106 bei keramischer Ausführung zum Beispiel eine Vielzahl von Noppen aufweisen, wie es in der EP 0 803 696 B1 beschrieben ist. Durch eine solche Maßnahme ist ein verbesserter Wärmeübergang zwischen den in dem Luftführungskanal 108 und dem Abgaskanal 109 strömenden Medien gewährleistet, so dass über den Längsabschnitt 114 ein erhöhter Wärmeaustausch zwischen den im Abgaskanal 109 und dem Luftführungskanal 108 strömenden Medien stattfindet, wodurch sich das Abgas deutlich abkühlt. Stoffe, die aufgrund von Sublimierungsvorgängen im Ofeninnenraum 103 in das Abgas gelangen, werden aufgrund der merklichen Abkühlung in dem Längsabschnitt 114 resublimiert und lagern sich an der Außenwandung des Rekuperators 106 ab. Diese Ablagerungen sind in dem Längsabschnitt 114 im Sinne der Erfindung erwünscht, da dieser Bereich gut zugänglich und dadurch zu warten und zu reinigen ist. Es ist somit möglich, in dem Längsabschnitt 114 des Rekuperators 106 eine gezielte Abscheidung von kondensierten und/oder resublimierten Stoffen aus dem Abgas vorzusehen. Es sei angemerkt, dass in den Figuren 5 und 8 aus Gründen der Übersichtlichkeit eine glatte Wandung des Längsabschnitts 114 des Rekuperators 106 dargestellt ist, diese jedoch sehr wohl im Rahmen der Erfindung auch mit Rippen oder anders ausgebildet sein kann.

Um infolge von Ablagerungen eine unerwünschte Verstopfung bzw. Zusetzung des Abgaskanals 109 oder Effizienzeinbußen des Rekuperatorbrenners 100 zu vermeiden, können durch Sensoren bestimmte Messwerte, die beispielsweise Rückschlüsse auf die im Abgaskanal 109 geförderte Menge an Abgasen, kontinuierlich von einer Überwachungseinrichtung ausgewertet werden, um auf eine bevorstehende Blockage des Abgaskanals 109 und einem möglicherweise damit verbundenen Ausfall des Rekuperatorbrenners 100 und/oder auf einen Wirkungsgradrückgang des Rekuperatorbrenners 100 hinzuweisen.

Sobald ein Wirkungsgradrückgang oder eine Verminderung der durch den Abgaskanal 109 strömenden Menge von Abgas festgestellt wird, kann auf eine erhöhte Verschmutzung bzw. Ablagerungen von kondensierten und/oder resublimierten Stoffen im Bereich des Längsabschnitts 114 des Rekuperators 106 geschlossen werden, so dass eine Reinigung bzw. Wartung des Rekuperatorbrenners 100 veranlasst werden kann.

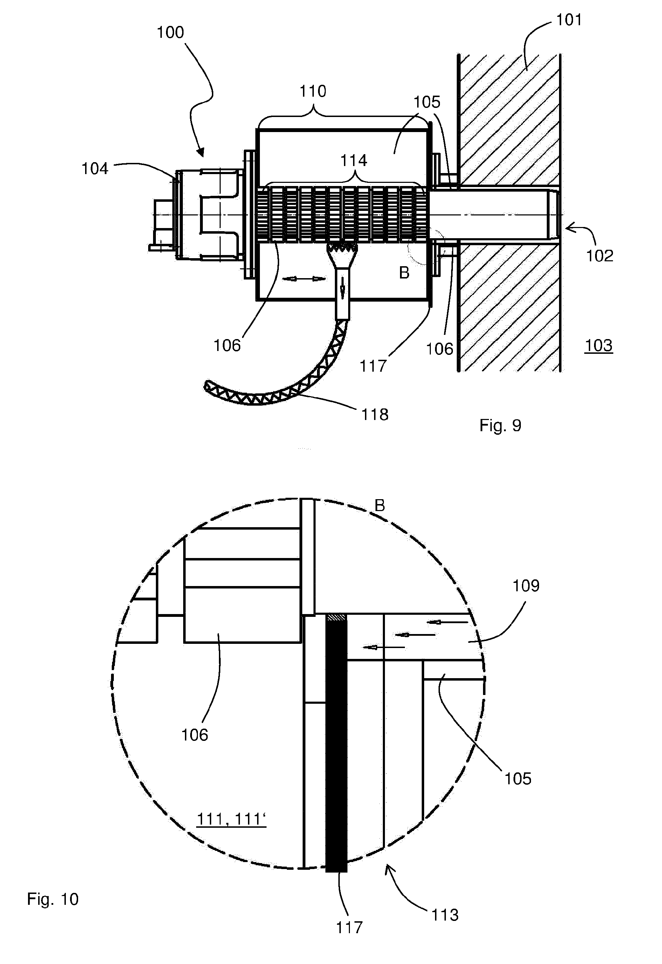

Durch die Erfindung wird eine Brennervorrichtung mit einem Rekuperatorbrenner 100 zur direkten Beheizung bereitgestellt, bei dem Wartungsarbeiten auch während des laufenden Ofenbetriebs durchgeführt werden können. Nachstehend wird das erfindungsgemäße Verfahren zur Wartung des Rekuperatorbrenners 100 dargestellt. Zu Wartungszwecken wird der Rekuperatorbrenner 100 zunächst außer Betrieb gesetzt und das Ansaugen der Abgase aus dem Ofeninnenraum 103 beendet. Nach einer gewissen Abkühlphase des Rekuperatorbrenners 100 kann dann zumindest ein Absperrelement 117 (siehe Figuren 9 bis 11) eingesetzt werden, um den Abgaskanal 109 im Bereich zwischen der Mündung 102 des Rekuperatorbrenners 100 und den Schalensegmenten 111 bzw. 111' abzudichten. Dadurch wird verhindert, dass trotz Stillstand des Rekuperatorbrenners 100 Abgase aus dem Ofeninnenraum 103 über den Abgaskanal 109 austreten, was insbesondere bei freigelegtem Längsabschnitt 114 des Rekuperators 106 dazu führen würde, dass Abgase ungefiltert in die Umgebung entweichen und die Gesundheit von mit Wartungsarbeiten betrauten Personen gefährden könnten.

Nach der Anbringung des zumindest einen Absperrelements 117 zur Abdichtung des Abgaskanals 109 werden dann die drehbar gelagerten Schalensegmente 111 bzw. 111' der Montagevorrichtung 130 verschwenkt, so dass nach Verschwenkung der von den Schalensegmenten 111 bzw. 111' überdeckte Längsabschnitt 116 des Rekuperators 106 freiliegt. Selbstverständlich kann das Abdichten des Abgaskanals 109 auch nach dem Öffnen der Schalensegmente 111 bzw. 111' erfolgen, wenn das Einbringen des zumindest einen Absperrelements 117 zügig und unmittelbar nach dem Öffnen erfolgt.

In den Figuren 7 bzw. 8 ist ein Teil des Rekuperatorbrenners 100 exemplarisch im Querschnitt dargestellt, nachdem die Schalensegmente 111 bzw. 111' radial und tangential zur Längsachse des Rekuperatorbrenners 100 klappenartig verschwenkt wurden, was in Figur 7 durch die Pfeilrichtungen angedeutet ist. Der nun freigelegte Längsabschnitt 116 des Rekuperators 106 ist dann zu Wartungszwecken leicht von außen zugänglich.

Nach dem Freilegen des Längsabschnitt 116 des Rekuperators 106 können dann Stoffe, die beispielsweise aus dem Abgas kondensiert und/oder resublimiert werden und sich im Betrieb des Rekuperatorbrenners 100 auf dem von den Schalensegmenten 111 bzw. 111' überdeckten Längsabschnitt 116 des Rekuperators 106 niedergeschlagen haben, mittels einer Reinigungsvorrichtung 118 entfernt werden. Zweckmäßigerweise ist die Reinigungsvorrichtung 118 nach Art einer Absaugvorrichtung bzw. eines Staubsaugers ausgeführt, dessen Düse über einen Bürstenkopf verfügt, der ein Lösen bzw. Lockern der auf der Außenwandung des Rekuperators 106 abgeschiedenen Stoffe begünstigt.

Bei dem beschriebenen Verfahren kann nach dem Außerbetriebsetzen des Rekuperatorbrenners 100 eine Schutzhülle um den Bereich der Schalensegmente 111, 111' angeordnet werden. Eine solche Schutzhülle kann nach Art einer evakuierten Kammer zur Chipherstellung ausgebildet sein, d.h. die Schutzhülle schottet den Arbeitsbereich von dem zu reinigenden Rekuperator 106 ab, so dass bei Freilegen des Rekuperators durch verschwenken der Schalensegmente keine abzureinigenden Stoffe durch Aufwirbelung in die Luft des Arbeitsbereiches gelangen. Zu diesem Zweck kann die Schutzhülle Mittel aufweisen, durch die Wartungsarbeiten hindurch durchgeführt werden können.

Nachstehend wird auf einen konkreten Anwendungsfall eingegangen, bei dem im Ofeninnenraum 103 ein molybdänhaltiger Stahl wärmebehandelt wird. Das Molybdän sublimiert hierbei in die Ofenatmosphäre und wird bei Abkühlung des Abgases im Rekuperator 106 resublimieren, wodurch sich pulverartige Ablagerungen bilden, welche die Wärmerückgewinnung im Rekuperator 106 behindern und den Abgaskanal 109 verstopfen können. Durch die Erfindung erfolgt die Abscheidung bzw. Ablagerung des resublimierten Molybdäns gezielt in dem Längsabschnitt 116 des Rekuperators 106, was dadurch begünstigt ist, dass der Rekuperator 106 im (schlecht zugänglichen) Bereich der Ofenwand 103 als Glattrohr und im (gut zugänglich machbaren) Bereich außerhalb der Ofenwand 103 als Rippenrohr ausgeführt ist und dass die außerhalb der Ofenwand 103 angeordnete Montagevorrichtung 130 bzw. die Schalensegmente 111 bzw. 111' und deren Anbringung am Rekuperatorbrenner 100 zur Reinigung des Rekuperators 106 - ohne erforderliche Demontage des Rekuperatorbrenners 100 - während des laufenden Ofenbetriebs geöffnet werden kann/können.

Die Vorteile der beschriebenen Montage- und Brennervorrichtung sowie des Verfahrens zur Reinigung der Brennervorrichtung sind eine Erhöhung des Ofenwirkungsgrades durch eine im Vergleich zum Stand der Technik hohe Abgaswärmerückgewinnung (starke Abgaskühlung), eine Rückgewinnung von resublimierten Stoffen, eine Vermeidung der Freisetzung von im Abgas sublimierten Stoffen in die Umwelt und eine Vermeidung einer gesundheitlichen Belastung von Personen an Industrieöfen.

Das Verfahren zum Betrieb einer direkt (ohne Strahlrohre) beheizten Thermoprozessanlage mit molybdänhaltigem (legiertem) Gut oder einem anderen Gut, welches verdampfbare oder sublimierbare Bestandteile enthält, ist **dadurch charakterisiert, dass** die beim Erhitzen des Gutes aus dem Gut ins Abgas abgegebenen Stoffe durch gezielte Abkühlung der Abgase an einem Wärmetauscher bzw. Rekuperator kondensiert oder resublimiert werden können, was eine gezielte Abscheidung eines möglichst hohen Anteils der vorher aus dem Gut freigesetzten Stoffe bewirkt, wobei diese Stoffe in Intervallen in Betriebspausen oder auch während des laufenden Ofenbetriebs von dem Rekuperator infolge des erfindungsgemäßen Rekuperatorbrenners abgereinigt und zurückgewonnen werden können.

Erfindungsgemäß ist der Rekuperatorbrenner 100 zur Beheizung einer Thermoprozessanlage **dadurch charakterisiert, dass** dieser Rekuperator 106 zur gezielten Kondensation oder Resublimation eines möglichst großen Anteils von im Ofenabgas enthaltenen Bestandteilen, die vorher aus dem wärmebehandelten Gut freigesetzt wurden, (i) im schlecht zugänglichen Bereich der Ofenwand 103 mit mäßigem/geringem Wärmeübergang zum Beispiel als Glattrohrwärmetauscher ausgeführt ist und (ii) im Bereich außerhalb der Ofenwand 103 mit sehr hohem Wärmeübergang zum Beispiel als Rippenrohr ausgeführt ist.

Die Schalensegmente 111 bzw. 111' bewirken, dass zur Reinigung des Rekuperators keine Demontage des Rekuperatorbrenners 100 erforderlich ist und die Reinigung auch während des laufenden Ofenbetriebes, jedoch bei Unterbrechung der Abgasführung über den zu reinigenden Rekuperator 106, durchgeführt werden kann. Durch die Montagevorrichtung 130 zusammen mit den Schalensegmente 111 bzw. 111' ist ein großer Teil des Rekuperators 106 zum Zweck der Reinigung zugänglich.

Konstruktiv ist daher die Montagevorrichtung 130 erforderlich, die einen Montageabschnitt 123 zur Anbringung des Rekuperatorbrenners 100 aufweist, wobei die Montagevorrichtung 130 einen axial verlaufenden Hohlraum aufweist, durch den sich der Rekuperatorbrenner 100 hindurch erstreckt und der zusammen mit dem Rekuperatorbrenner 100 einen Abgaskanal 109 definiert. Dabei ist der axial verlaufende Hohlraum von einer Abdeckung gebildet, die zumindest zwei Schalensegmente 111, 111' umfasst, die in fluiddichtender Weise zumindest einen Längsabschnitt 114 des Rekuperatorbrenners 100 umschließen und die zum Zugriff auf den Längsabschnitt 114 des Rekuperatorbrenners 100 zumindest mit einem ihrer beiden Längsenden demontierbar und/oder schwenkbar an dem Montageabschnitt 123 angebracht sind.

Hierbei weisen die zumindest zwei Schalensegmente 111, 111' eine Isolation auf, durch die ein Wärmeaustausch des Abgases mit der äußeren Umgebung weitestgehend vermieden wird. Die Formgebung der zumindest zwei Schalensegmente 111, 111' ist beliebig, wobei eine kreisbogenförmige oder eckige Querschnittsform vorzuziehen ist. Die Montagevorrichtung 130 weist ferner einen Verbindungsabschnitt 120 auf, an dem die dem Montageabschnitt 123 abgewandten Längsenden der zumindest zwei Schalensegmente 111, 111' demontierbar und/oder schwenkbar anbringbar sind. Der Verbindungsabschnitt kann eine Flanschplatte sein, über die die Montagevorrichtung an einer Ofenwand einer Thermoprozessanlage anbringbar ist. Um mit der Wartung des Rekuperatorbrenners beauftragte Personen vor aus dem Abgasführungskanal strömenden Abgasen zu schützen, sieht die Erfindung in weiterer Ausgestaltung der Montagevorrichtung vor, dass der von dem Hohlraum und dem Rekuperatorbrenner 100 definierte Abgasführungskanal 109 an den dem Montageabschnitt 123 abgewandten Längsenden der zumindest zwei Schalensegmente 111, 111' mittels zumindest eines Absperrelements 117 abdichtbar ist.

## Patentansprüche

1. Brennervorrichtung zur direkten Beheizung einer Thermoprozessanlage, bevorzugt mit einem konzentrischen Aufbau, wobei die Brennervorrichtung einen zum Teil in einer Ofenwand (103) der Thermoprozessanlage einsetzbaren Rekuperatorbrenner (100), der ein Luftführungsrohr (107) und einen als Wärmetauscher dienenden und das Luftführungsrohr (107) koaxial umgebenden Rekuperator (106) aufweist, und ein den Rekuperator (106) koaxial umgebendes Abgasführungsrohr (105) umfasst,
**dadurch gekennzeichnet, dass** zumindest ein Rohrlängsabschnitt (110) des Abgasführungsrohres (105) aus wenigstens zwei Schalensegmenten (111; 111') gebildet ist, die in radialer Richtung zur Längsachse des Rekuperators (106) abnehmbar und/oder schwenkbar sind, wobei die wenigstens zwei Schalensegmente (111; 111') im Betrieb des Rekuperatorbrenners (100) außerhalb der Ofenwand (101) anordenbar sind und einen zu dem Rohrlängsabschnitt (110) des Abgasführungsrohres (105) korrespondierenden Längsabschnitt (114) des Rekuperators (106) in fluiddichtender Weise umschließen.

2. Brennervorrichtung nach Anspruch 1, **dadurch gekennzeichnet, dass** ein zwischen der Mündung (102) des Rekuperatorbrenners (100) und den wenigstens zwei Schalensegmenten (111; 111') verlaufender Längsabschnitt (116) des Rekuperators (106) glattwandig ausgebildet ist.

3. Brennervorrichtung nach Anspruch 1 oder 2, **dadurch gekennzeichnet, dass** zumindest der von den wenigstens zwei Schalensegmenten (111; 111') umschlossene Längsabschnitt (114) des Rekuperators (106) mit einer die Wärmeübertragung begünstigenden vergrößerten Wandfläche ausgebildet ist.

4. Brennervorrichtung nach einem der Ansprüche 1 bis 3, **dadurch gekennzeichnet, dass** der zwischen dem Rekuperator (106) und dem Abgasführungsrohr (105) ausgebildete Ringraum (109) im Bereich zwischen der Mündung (102) des Rekuperatorbrenners (100) und den wenigstens zwei Schalensegmenten (111; 111') mittels zumindest eines Absperrelements (117) abdichtbar ist.

5. Verfahren zur Wartung einer Brennervorrichtung nach einem der Ansprüche 1 bis 4, bei dem zur Wartung des als Wärmetauscher dienenden Rekuperators (106) der Rekuperatorbrenner (100) außer Betrieb gesetzt wird, **dadurch gekennzeichnet, dass** die wenigstens zwei Schalensegmente (111; 111') derart demontiert oder klappenartig verschwenkt werden, dass der von den wenigstens zwei Schalensegmenten (111; 111') umgebene Längsabschnitt (114) des Rekuperators (106) freigelegt und zu Wartungszwecken von außen zugänglich wird.

6. Verfahren nach Anspruch 5, **dadurch gekennzeichnet, dass** nach dem Freilegen des Längsabschnitts (114) des Rekuperators (106) aus dem Abgas niedergeschlagene und/oder abgelagerte Stoffe, vorzugsweise kondensierte und/oder resublimierte Stoffe oder Staub an Wassertropfen, die sich im Betrieb des Rekuperatorbrenners (100) auf dem von den wenigstens zwei Schalensegmenten (111; 111') überdeckten Längsabschnitt (114) des Rekuperators (106) niederschlagen, mittels einer Reinigungsvorrichtung (118) entfernt werden.

7. Verfahren nach Anspruch 5 oder 6, **dadurch gekennzeichnet, dass** nach dem Außerbetriebsetzen des Rekuperatorbrenners (100) und vor oder nach dem Freilegen des Längsabschnitts (114) des Rekuperators (106) ein zwischen dem Rekuperator (106) und dem Abgasführungsrohr (105) ausgebildeter Ringraum (109) im Bereich zwischen der Mündung (102) des Rekuperatorbrenners (100) und den wenigstens zwei Schalensegmenten (111; 111') mittels zumindest eines Absperrelements (117) abgedichtet wird.

8. Verfahren nach einem der Ansprüche 5 bis 7, **dadurch gekennzeichnet, dass** nach dem Außerbetriebsetzen des Rekuperatorbrenners (100) eine Schutzhülle um den Bereich der wenigstens zwei Schalensegmenten (111; 111') angeordnet wird, die Mittel aufweist, durch die das Freilegen und Warten des Längsabschnitts (114) des Rekuperators (106) von außerhalb der Schutzhülle durchführbar sind.
